# EUROPEAN PATENT SPECIFICATION

(11) **EP 0 688 498 B1**
(45) Date of publication and mention of the grant of the patent: **12.07.2000**
(21) Application number: 95202054.3
(22) Date of filing: 02.05.1991
(51) Int. Cl.: A01J 7/00, G01S 7/48

(54) **A milking plant**
Melkanlage
Installation de traite

(30) Priority: 04.05.1990 NL 9001076
(43) Date of publication of application: 27.12.1995
(62) Divisional of application: 91201035.2
(73) Proprietor: MAASLAND N.V., 3155 PD Maasland (NL)
(72) Inventor: van den Berg, Karel, NL-2971 BR Bleskensgraaf (NL); Fransen, René, NL-3135 ZD Vlaardingen (NL)
(74) Representative: Corten, Maurice Jean F.M.

(56) References cited:
- EP-A- 0 360 354

## Description

The invention relates to milking plants as described in the preamble of claim 1 following the present description.

Such a milking plant is known from e.g. the non-prepublished European Patent Application 89202372.2. In the milking plant described by this document, a sensor utilizing light radiation is present for determining the position of the teats of an animal, so as to enable an automatic application of teat cups thereto. Light sensors, including laser sensors, are generally known for the purpose of succesful tracking or locating of objects. When applied in a milking robot, however, the functioning of the robot appears to be not as consistent as may be expected, particularly in that the teats of an animal are not always, or at least insufficiently accurately, found. According to the invention, a milking plant for automatically milking animals and for automatically applying teat cups thereof, utilizing a light sensor for determining the exact position of the teats of an animal to be milked, may be improved by a construction as described in the characterizing part of the said claim 1. According to the understanding underlying the idea of the invention, the malfunctioning of the known milking plant is due to the light sensor arrangement thereof, more specifically to exterior circumstances influencing its functioning. Cleaning of the translucent parts of the light sensor arrangement appeared to improve the functioning of the milking plant. The particular construction according to the invention has the advantage of a reduced maintenance of the milking plant and of a further relief of the necessary operating tasks for the farmer.

In a favourable embodiment according to the invention, the sensor arrangement of the milking plant is capable of performing a test for checking the cleanliness of its translucent parts. This has the advantage that an indication of the necessity of cleaning the sensor arrangement may be achieved automatically, so that the independency of the operation of the milking plant may be enhanced considerably. In this way, the farmer is also relieved from regularly checking the cleanliness of the sensor arrangement.

In a particularly favourable construction according to the invention, the automatic cleaning of the sensor arrangement is effected when, after testing of the cleanliness of the sensor arrangement, it is found to be insufficient. A suchlike construction obviates time-consuming regular cleaning operations, thereby improving the efficiency of the milking plant. In a favourable embodiment of the milking plant, the cleaning means comprise a sponge, while means are present for applying a cleaning liquid to the cleaning means.

According to a further favourable embodiment, the light sensor arrangement is located on the robot arm. In this way, the sensor arrangement is constantly brought close to the teats of the animal after the robot arm is positioned roughly in the neighbourhood thereof. The finding of the exact position of a teat by the light sensor is thus made easier in that the sensor is brought close to the teat and in a favourable position for the undisturbed radiation of light. This construction is also favourable in that the arm carrying the sensor simultaneously carries the teat cup to be connected to the teat to be located, thus realizing a quick and efficient application of teat cups and an economic construction of the robotic part of the milking plant. In a particularly favourable embodiment in this respect, the light sensor arrangement is located on the teat cup carrying end portion of the robot arm.

The above-described automatic cleaning of the sensor arrangement appears to be particularly useful in the latter embodiment in that, apart from contamination by splashes of animal excrements, the arrangement in this construction also gets contaminated by pre-releases of milk occurring at certain cows and by dirt on the animal's udder. Although the teats and the lower part of the udder are normally cleaned before milking, they may still be moist or partially wet and thus appear to be a source by which the sensor arrangement on the end of a robot arm may get smudged.

In a further favourable embodiment, means are present for cleaning the sensor arrangement through a sliding movement over the translucent parts of the sensor arrangement. In this way, an expensive motor device for rotating a cleaning means may be avoided and an effective use is made of the activating means, such as pressurized air or liquid, present in the milking plant.

Another favourable arrangement according to the invention is characterized in that testing means for testing the light sensor arrangement are provided at a known distance from the light sensor arrangement, when the latter is in a testing position.

For a better understanding of the invention and to show how the same may be carried into effect, reference will now be made, by way of example, to the accompanying drawings, in which:
Figure 1 is, in a first embodiment, a cross-sectional view of the measuring arrangement in accordance with the invention;
Figure 2 is, in a second embodiment, a cross-sectional view of the measuring arrangement in accordance with the invention;
Figure 3 is a cross-sectional view of the arrangement housing and shows its relief structure;
Figure 4 is a front view of the housing and shows a multi-section window;

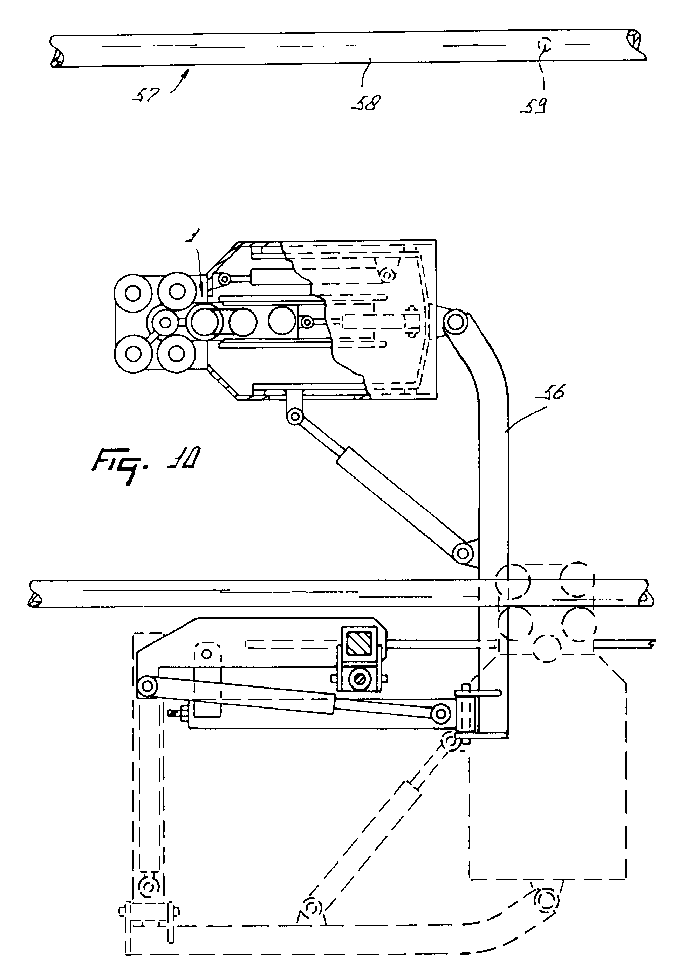

Figure 5 is a cross-sectional side view of the view of Figure 4;
Figure 6 is a side view of a housing portion including, in a first embodiment, a cover for covering the window in the housing and the control means used therefor;
Figure 7, too, is a side view of a housing portion including, in a second embodiment, a covering means constituted by a slide ring in combination with a cleaning means;
Figure 8 is a plan view of Figure 7;
Figure 9 is a partly cut-away side view of an arrangement including an inner housing and an outer housing, and
Figure 10 is a plan view of the arrangement mounted on the end of a robot arm of an automatic milking machine.

In the drawings, corresponding components are denoted by the same reference numerals. Furthermore, the invention is in no way limited to the embodiments shown and described here; they only serve as an illustration of the inventive idea.

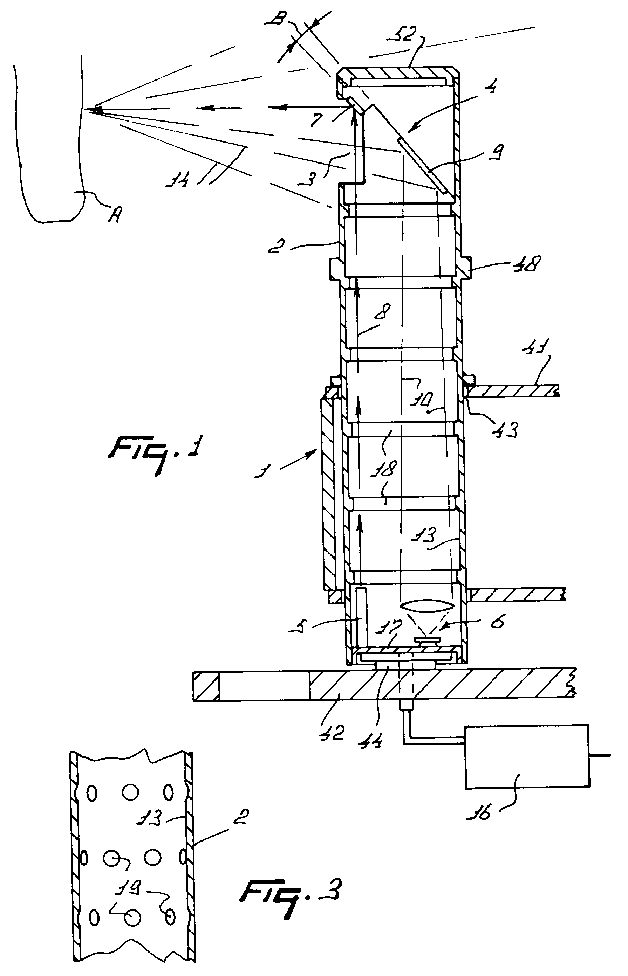

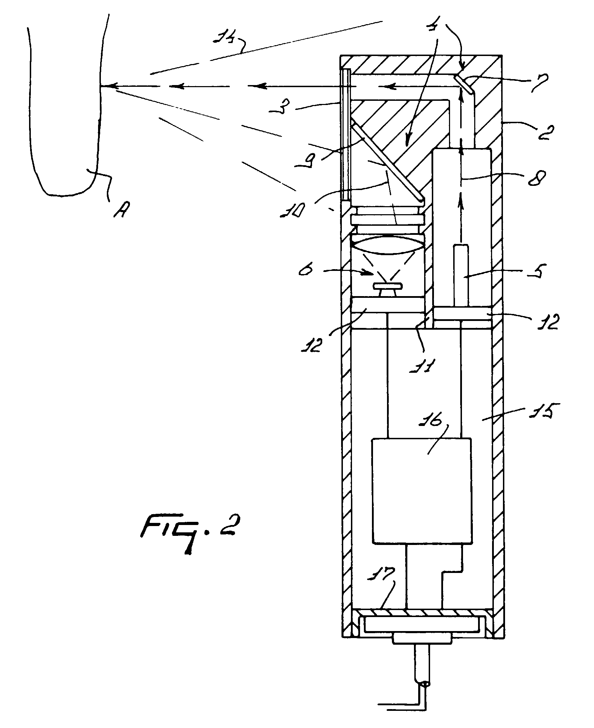

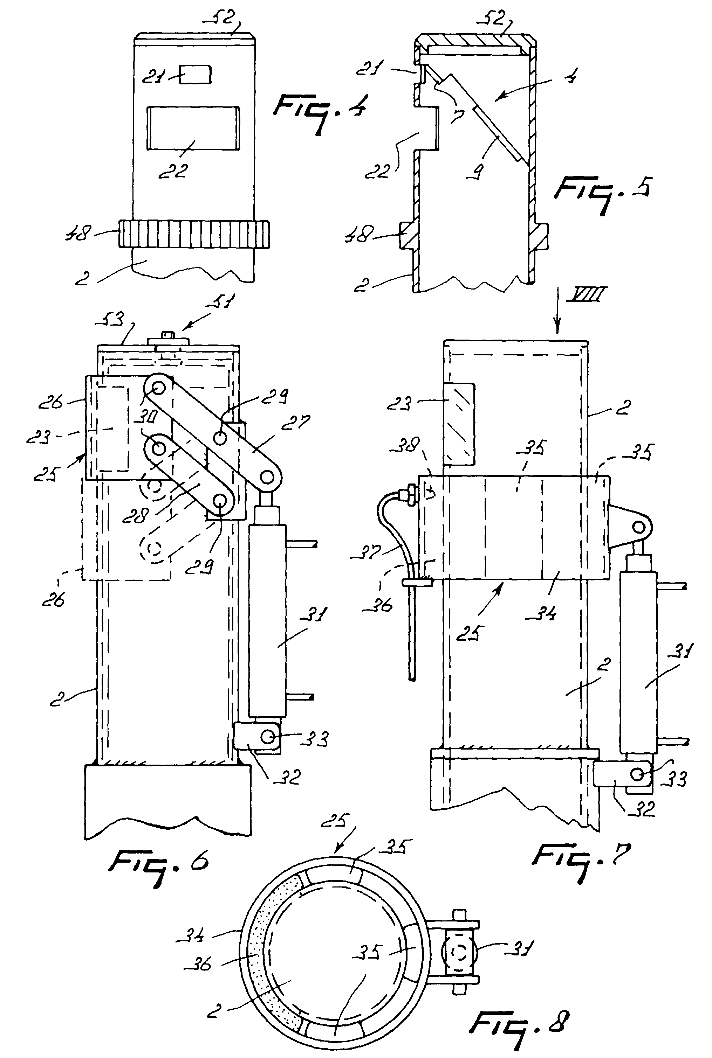

Figure 1 shows an arrangement for determining the distance therefrom to an object in accordance with the invention; the arrangement 1 measures the distance to the object A and comprises a housing 2, a window 3, a reflecting element 4, a transmitter element 5 and a receiver element 6. The reflecting element 4 includes the reflector 7 for reflecting the radiation 8 originating from the transmitter element 5 and the reflector 9 for reflecting the radiation 10 reflected from the object. During operation, the transmitter element 5 transmits via the reflector 7 through the window 3 light rays to the object 2, where the radiation is reflected and dispersed. Part of this reflected and dispersed radiation returns to the housing again via the window 3 and is directed to the receiver element 6 by the reflector 9. In the embodiments of Figures 1 and 2, the transmitted radiation beam is reflected horizontally. For the purpose of separating the outgoing radiation beam 8 from the incident radiation beam 10, the reflectors 7 and 9 of the reflector element 4 are arranged at an angle B. By means of the angle B it is achieved that the radiation beams 8 and 10 remain separated from each other. Depending on the distance to the elements 5 and 6, the angle B is also such that the radiation beams cannot reach the inner wall 13 of the housing. The separation of the beams is possible in the first instance by arranging the reflectors 7 and 9 at different heights and, with respect to the window 3, one behind the other. These conditions yield four possible configurations, two of which are shown in Figures 1 and 2. These Figures show the configurations wherein the reflector 7 for the transmitted radiation beam is disposed above the reflector 9 for the received radiation beam. In certain cases, this configuration is preferred to that wherein the reflector 9 for the received beam is located above the reflector 7. More specifically, this is the case when the arrangement is limited in its vertical movement by e.g. a ceiling or a similar obstacle. Since the transmitted radiation beam 8 is reflected and slightly dispersed by the object as diffuse light 14, it is irrelevant whether the reflector for the received radiation beam is located above, beside or below the reflector 7 of the transmitted radiation beam. Consequently, the configurations of Figures 1 and 2 render it possible for the arrangement to be located very closely to a ceiling, while measurements by means of a horizontally reflected transmitted radiation beam remain possible.

Figure 2 shows a further improvement of the reflector arrangement. In this Figure, the reflector 7 for the transmitted radiation beam 8 is located, relative to the window 3, behind the reflector 9. Since also the transmitter element 5 is located, with respect to the window 3, behind the receiver element 6, this configuration effects that the transmitted radiation beam 8 does not intersect the incident received radiation beam 10, so that no dispersion occurs.

An optimum signal reception is effected not only by separating the radiation beams 8, 10, but also by inter alia counteracting dispersions and reflections inside the housing and by limiting incident ambient light. In Figure 2, the transmitted radiation beam 8 and the received radiation beam 10 are separated from each other by means of a separator element 11. This element is opaque. Hereby it is ensured that the quantity of dispersed light, which e.g. is produced by incident ambient light coming into contact with the transmitted radiation beam, is reduced still further.

In Figure 2, the receiver element 6 and the transmitter element 5 are fitted closely below the reflector element 4. For that purpose, the carrier elements 12 are clamped with a tight fit in the relevant space. Hereby there is created inside the housing 2 a space 15 which is suitable for the accommodation of at least the control electronics 16 of the transmitter and receiver elements. In Figure 1, the transmitter and the receiver elements bear on the bottom 17 of the housing and the control electronics is installed outside the housing.

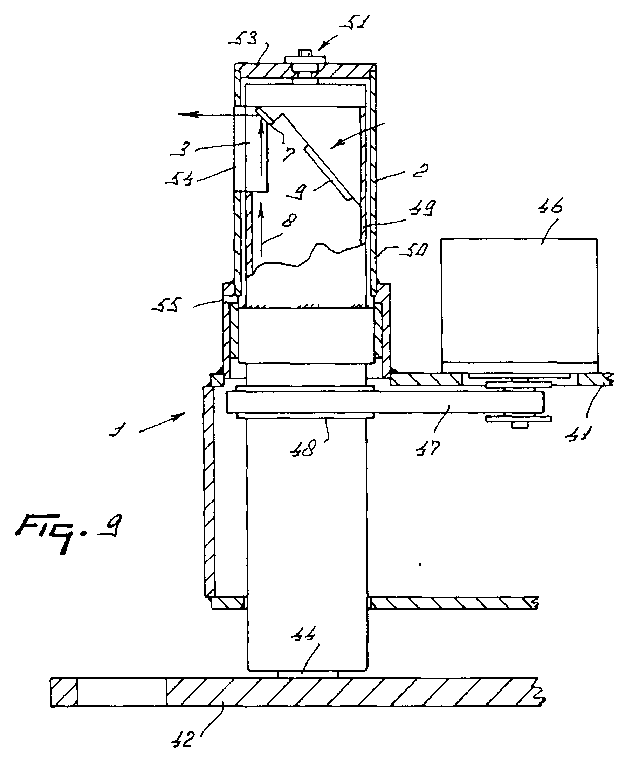

The counteracting of reflections is effected inter alia by the provision of relief elements. The relief elements may consist of bulges 18 which, as shown in the embodiment of Figure 1, are arranged at an interspace of 30 mms along the entire circumference of the wall 13 and transversely to the direction of the radiation beams 8, 10. However, an advantageous relief structure is also obtained by applying spherical bulges or recesses 19, as is shown schematically in Figure 3. The counteracting of incident ambient light is effected by reducing the dimensions of the window 3 to an aperture size required for the ingoing and outgoing radiation beams 8 and 10, respectively. Figure 4 clearly illustrates that, for that purpose, the window 3 is divided into two portions: i.e. a window portion 21 for the outgoing radiation beam 8 and a window portion 22 for the light reflected from and dispersed by the object.

The window of the arrangement may be in the form of an aperture. Figures 6 and 7 show an embodiment of the arrangement 1 having a sealed window 23. This sealing may consist of glass or a translucent synthetic resin material. So as to prevent the occurrence of reflections because of the sealed window 23, in the embodiment of Figure 1 the inner side of the sealed window 23 is coated with an anti- reflection layer. A further measure to prevent reflections can be obtained by making the housing or, in case of the embodiment in Figure 2, the housing of only the receiver element of semi-transparent material. The light incident on the inner wall 13 is then allowed to pass, whilst light from the outside cannot enter.

The sealing of the window 3 prevents the penetration of dirt into the housing. However, a disadvantage is that the cover itself may get dirty, which might disadvantageously affect the distance measurement. For this reason there is provided a special means 25 which covers the window during the major portion of the time. This cover is only removed when a measuring operation is actually being performed with the arrangement. This cover means can also be used with a non-sealed window.

In Figure 6, the cover plate 26 is suspended from a parallelogram construction formed by the arms 27 and 28. In this structure, the hinging pins 29 are connected rigidly to the housing 2. The hinging pins 30 connect the parallelogram arms 27 and 28 to the cover plate 26. At its end remote from the plate 26, the parallelogram arm 27 is extended such as to be capable of acting as a lever. In its lever function, the arm 27 is moved by means of a cylinder 31 which bears against the housing itself, i.e. via a support 32, to which the cylinder 31 is connected via a hinge pin 33. The lifting cylinder 31 can be moved by means of both air and liquid. However, it is alternatively possible to replace the cylinder 31 by a mechanism provided with a gear rack or by a mechanism having a spring and rods.

In a further embodiment of the means 25 as shown in Figure 7, the parallelogram construction is replaced by a sealing ring 34 which envelops the housing and is slidable along the housing by means of a lifting cylinder 31. During this sliding movement, the sealing ring is guided by the guide members 35 (Figure 8). The guide members may be in the form of bearings, self-lubricating synthetic resin materials or a modern plastics material having a low coefficient of sliding resistance.

Since, in spite of the cover, the window 3 can still become dirty, the two embodiments of the cover means 25 can be equipped with means for automatic cleaning the window. To that end, the cover plate portion present in front of the window is fitted with a sponge 36. This sponge can be wetted with a cleaning agent via a supply line 37 to terminate in the injection point 38. In Figure 7, this injection point is located at the upper side of the sponge, but different positions are alternatively possible. It is also conceivable for the cleaning agent supply line 37 to be branched into various injection points.

In an advantageous embodiment, the arrangement is in the form of a tube, as is shown in the embodiments of Figure 1 and 2. In Figure 1, the arrangement 1 is maintained in position by a holder 41 and a carrier 42. For the sake of the rotary movement of the housing 2, this housing is bearing-supported relative to the holder 41 and the carrier 42 by means of a sliding member 43 and the bearing elements 44, respectively. The sliding member 43 may be designed as a bearing, a self-lubricating ring or a ring made of a modern plastics material having a low coefficient of sliding resistance.

The housing 2 as is shown in Figure 9 can be put into movement by means of a motor 46 and an endless element 47 to engage a drive means 48 at the housing 2. This drive means 48 is an annular ridge having a flat side or a welded annular element having a flat side, around which the endless element 47, in particular a belt, can be passed. The drive means 48 may alternatively be designed as a cam disc, the endless element 47 then including a profiled belt or chain to engage the cam disc.

In addition, Figure 9 shows an embodiment of the arrangement 1 wherein the housing 2 is assembled from an inner housing 49 and an outer housing 50. The inner housing 49 is rotatable about the common axis of the two housings. The axis of rotation extends through the centring point 51 in the upper ends of the two housings. Both the upper end of the inner housing and the upper end of the outer housing completely seal the relevant housing at its upper side. At the level of the window 3 of the inner housing 49, the outer housing 50 has a window 54.

With a view to determining the location of the object A, the inner housing 49 is reciprocated by the motor with the aid of a drive element. Using the radiation beams, a limited area is checked for the presence of an object A. In this situation, a region of more than 120° is covered in a horizontal plane. Since the outer housing 50 is in a fixed position, the window 54 thereof covers a much wider peripheral plane than the window of the inner housing 49. In the embodiment of Figure 9, this range is approximately 120° with a uniform distribution thereof on either side of the centre of the inner window, when the inner housing is in its starting position.

In comparison with the single housing, the structure comprising two housings provides additional possibilities as regards the cleaning of the arrangement. Thus, it is possible to rotate the inner housing 49 such that the inner window is remote from the window aperture of the outer window. In the case wherein the inner window is open, this reduces the risk of dirt penetrating into the housing and/or, when the inner window is covered, contamination of this inner window. When the window in the outer housing 50 is sealed, these problems do not occur for the inner window. In the case wherein only the inner window 49 is sealed and consequently dirt can collect between the two housings, the outer housing is provided near its lower side with flushing holes 55, through which dirt can be removed with the aid of air or water. An other solution to this problem may be provided by the use of gasket rings located between the two housings and immediately below the window apertures.

A specific use of the arrangement 1 is obtained when it is employed to determine the position of the teats of a cow. Hereby it is rendered possible to connect the teat cups of a milking plant to the teats of an animal. This action is essential in an automatic milking system. Then, as is shown in Figure 10, the teat cups and also the arrangement 1 are mounted on the end of a robot arm 56 which is controlled by means of the measuring data from the arrangement 1. Since the arrangement can easily be contaminated during automatic milking, a regular check of the cleanliness of the windows is imperative. To that end, the arrangement 1, when it is in an initial position, can co-operate with a test means provided at a known distance therefrom. Preferably, this test means is a rod 59 having the thickness of a teat. In Figure 10, the robot arm has, in its initial position, a fixed location relative to the milking parlour 57 where the cow is being milked. Opposite to the initial position of the robot arm carrying the arrangement 1, there is fitted on the frame portion 58 of the milking parlour 57 a test means constituted by the vertical rod 59. The rod 59 is uniformly black, so that it is checked whether the window 3 is still bright enough to determine the location of the object which is most difficult to detect.

In the embodiments, the transmitter element 5 is in the form of a laser. During transmission, use is made of radiation in the frequency range of from 780 to 830 nms. Depending on the type of animals or the species of animals to be milked and, hence, on the average colour of the teats, this frequency range can be shifted for the purpose of obtaining a wavelength range of the transmitted radiation, which is tuned to the colour of the teats.

## Claims

1. Milking plant for automatically milking animals in a milking parlour, comprising a light sensor arrangement (1) for determining the position of the teats of an animal, and a robot arm (56) cooperating with said sensor arrangement (1), for automatically connecting teat cups to the teats of an animal, the light sensor arrangement (1) comprising translucent parts (23) through which light for detecting the teats of an animal is radiated, characterized in that cleaning means (36) are provided for automatically cleaning at least the translucent parts (23) of the sensor arrangement (1).

2. Milking plant as claimed in claim 1, characterized in that the sensor arrangement (1) is capable of performing a test of the cleanliness of its translucent parts.

3. Milking plant as claimed in claim 1 or 2, characterized in that the automatic cleaning of the sensor arrangement (1) is effected when, after testing, the cleanliness of the sensor arrangement (1) is found to be insufficient.

4. Milking plant as claimed in claim 1, 2 or 3, characterized in that the cleaning means (36) comprise a sponge.

5. Milking plant as claimed in any one of the preceding claims, characterized in that means (37) are present for applying a cleaning liquid to the cleaning means (36).

6. Milking plant as claimed in any one of the preceding claims, characterized in that the light sensor arrangement (1) is located on the robot arm (56).

7. Milking plant as claimed in any one of the preceding claims, characterized in that the light sensor arrangement (1) is located on the teat cup carrying end portion of the robot arm (56).

8. Milking plant as claimed in any one of the preceding claims, characterized in that means (31, 34) are present for cleaning the sensor arrangement through a sliding movement over the translucent parts (23) of the sensor arrangement (1).

9. Milking plant as claimed in any one of the preceding claims, characterized in that the cleaning means (31, 34, 35, 36, 37) are mounted on the robot arm (56), more specifically to a housing part (2) of the light sensor arrangement (1).

10. Milking plant as claimed in any one of the preceding claims, characterized in that testing means (59) for testing the light sensor are provided at a known distance from the light sensor arrangement (1) when the latter is in a testing position.

## Patentansprüche

1. Melkanlage zum automatischen Melken von Tieren in einem Melkstand, mit einer Lichtsensor-Vorrichtung (1) zum Ermitteln der Position der Zitzen eines Tieres sowie mit einem mit der Sensor-Vorrichtung (1) zusammenwirkenden Roboterarm (56) zum automatischen Anschließen von Zitzenbechern an die Zitzen eines Tieres, wobei die Lichtsensor-Vorrichtung (1) lichtdurchlässige Teile (23) aufweist, durch welche Licht zum Detektieren der Zitzen eines Tieres gestrahlt wird,
dadurch gekennzeichnet, daß eine Reinigungsvorrichtung (36) zum automatischen Reinigen zumindest der lichtdurchlässigen Teile (23) der Sensor-Vorrichtung (1) vorhanden ist.

2. Melkanlage nach Anspruch 1,
dadurch gekennzeichnet, daß die Sensor-Vorrichtung (1) in der Lage ist, einen Test auf Sauberkeit ihrer lichtdurchlässigen Teile durchzuführen.

3. Melkanlage nach Anspruch 1 oder 2,
dadurch gekennzeichnet, daß die automatische Reinigung der Sensor-Vorrichtung (1) durchgeführt wird, wenn der Test ergibt, daß die Sauberkeit der Sensor-Vorrichtung (1) unzureichend ist.

4. Melkanlage nach Anspruch 1, 2 oder 3,
dadurch gekennzeichnet, daß die Reinigungsvorrichtung (36) einen Schwamm umfaßt.

5. Melkanlage nach einem der vorhergehenden Ansprüche,
dadurch gekennzeichnet, daß eine Vorrichtung (37) zum Zuführen einer Reinigungsflüssigkeit zu der Reinigungsvorrichtung (36) vorhanden ist.

6. Melkanlage nach einem der vorhergehenden Ansprüche,
dadurch gekennzeichnet, daß die Lichtsensor-Vorrichtung (1) an dem Roboterarm (56) angeordnet ist.

7. Melkanlage nach einem der vorhergehenden Ansprüche,
dadurch gekennzeichnet, daß die Lichtsensor-Vorrichtung (1) an dem Zitzenbecher tragenden Endteil des Roboterarmes (56) angeordnet ist.

8. Melkanlage nach einem der vorhergehenden Ansprüche,
dadurch gekennzeichnet, daß Vorrichtungen (31, 34) vorhanden sind, um die Sensor-Vorrichtung durch eine gleitende Bewegung über die lichtdurchlässigen Teile (23) der Sensor-Vorrichtung (1) zu reinigen.

9. Melkanlage nach einem der vorhergehenden Ansprüche,
dadurch gekennzeichnet, daß die Reinigungsvorrichtungen (31, 34, 35, 36, 37) an dem Roboterarm (56), insbesondere an einem Gehäuseteil (2) der Lichtsensor-Vorrichtung (1), angeordnet sind.

10. Melkanlage nach einem der vorhergehenden Ansprüche,
dadurch gekennzeichnet, daß eine Testvorrichtung (59) zum Testen des Lichtsensors in einem vorgegebenen Abstand von der Lichtsensor-Vorrichtung (1) angeordnet ist, wenn sich letztere in einer Testposition befindet.

## Revendications

1. Installation de traite pour la traite automatique d'animaux dans un box de traite, comportant un agencement de détection de lumière (1) pour déterminer la position des trayons d'un animal, et un bras de robot (56) coopérant avec ledit agencement de détection (1), pour relier automatique des gobelets trayeurs aux trayons d'un animal, l'agencement de détection de lumière (1) comportant des parties translucides (23) à travers lesquels la lumière destinée à détecter les trayons d'un animal est rayonnée, caractérisée en ce que des moyens de nettoyage (36) sont agencés pour le nettoyage automatique au moins des parties translucides (23) de l'agencement de détection (1).

2. Installation de traite selon la revendication 1, caractérisée en ce que l'agencement de détection (1) peut effectuer un test de propreté de ses parties translucides.

3. Installation de traite selon la revendication 1 ou 2, caractérisée en ce que le nettoyage automatique de l'agencement de détection (1) est effectué quand, après le test, la propreté de l'agencement de détection (1) se trouve être insuffisante.

4. Installation de traite selon la revendication 1, 2 ou 3, caractérisée en ce que les moyens de nettoyage (36) comportent une éponge.

5. Installation de traite selon l'une quelconque des revendications précédentes, caractérisée en ce que des moyens (37) sont présents pour appliquer un liquide de nettoyage sur les moyens de nettoyage (36).

6. Installation de traite selon l'une quelconque des revendications précédentes, caractérisée en ce que l'agencement de détection de lumière (1) est situé sur le bras de robot (56).

7. Installation de traite selon l'une quelconque des revendications précédentes, caractérisée en ce que l'agencement de détection de lumière (1) est situé sur la partie d'extrémité du bras de robot (56) supportant le gobelet trayeur.

8. Installation de traite selon l'une quelconque des revendications précédentes, caractérisée en ce que des moyens (31, 34) sont présents pour nettoyer l'agencement de détection par l'intermédiaire d'un mouvement coulissant sur les parties translucides (23) de l'agencement de détection (1).

9. Installation de traite selon l'une quelconque des revendications précédentes, caractérisée en ce que les moyens de nettoyage (31, 34, 35, 36, 37) sont montés sur le bras de robot (56), plus spécifiquement sur une partie de boîtier (2) de l'agencement de détection de lumière (1).

10. Installation de traite selon l'une quelconque des revendications précédentes, caractérisée en ce que des moyens de test (59) pour tester le détecteur de lumière sont agencés à une distance reconnue à partir de l'agencement de détection de lumière (1) quand ce dernier est dans une position de test.
